Europäisches Patentamt

European Patent Office

Office européen des brevets

(19)

(11) Veröffentlichungsnummer: **0 021 322**
**B1**

(12) **EUROPÄISCHE PATENTSCHRIFT**

(45) Veröffentlichungstag der Patentschrift: 01.06.83

(51) Int. Cl.³: **C 09 J 3/12, B 05 D 1/14**

(21) Anmeldenummer: **80103369.7**

(22) Anmeldetag: **06.06.80**

(54) **Klebmittel auf Basis wässriger Dispersionen zum Verbinden von Fasern mit Substraten.**

(30) Priorität: **11.06.79 DE 2923650**

(43) Veröffentlichungstag der Anmeldung:
**07.01.81 Patentblatt 81/1**

(45) Bekanntmachung des Hinweises auf die Patenterteilung:
**01.06.83 Patentblatt 83/22**

(84) Benannte Vertragsstaaten:
**AT BE CH DE FR GB LI**

(56) Entgegenhaltungen:
**FR - A - 2 372 857**
**GB - A - 1 091 523**
**US - A - 3 278 333**

(73) Patentinhaber: **Henkel Kommanditgesellschaft auf Aktien**
**Postfach 1100 Henkelstrasse 67**
**D-4000 Düsseldorf 1 (DE)**

(72) Erfinder: **Özelli, Riza Nur, Dr.**
**Stephanusstrasse 37**
**D-4040 Neuss (DE)**

Courier Press, Leamington Spa, England.

Klebmittel auf Basis wäßriger Dispersionen zum Verbinden von Fasern mit Substraten

Die vorliegende Erfindung betrifft Klebmittel zum Verbinden von Fasern mit Substraten aus Kautschuk auf Basis von wäßrigen Dispersionen, die sowohl bei vulkanisiertem wie unvulkanisiertem Kautschuk feste Klebeverbindungen geben.

Es ist bekannt, die verschiedensten Substrate mit Fassern zu beflocken, wobei die Beflockung durch einen geeigneten Klebstoff fest mit dem Untergrund verbunden werden muß. Für diese Zwecke eignen sich beispielsweise wäßrige Klebstofflösungen auf der Basis von Harnstoff oder Melaminharzen sowie Kunststoffdispersionen auf der Grundlage von Polyvinylacetat, Polyvinylpropionat und Polyacrylsäureestern. Hochwertige Klebeverbindungen können mit lösungsmittelhaltigen Klebstoffen auf Polyurethan- beziehungsweise Isocyanatbasis und auf Basis von Polyepoxidverbindungen hergestellt werden. Die zuletztgenannten Klebstoffe müssen, abgesehen von der Verwendung von Lösungsmitteln, meist als Zweikomponenten-Kleber eingesetzt werden und weisen demnach nur ein begrenztes Potlife auf.

Aufgabe der vorliegenden Erfindung war es, solche wäßrigen Klebstoffdispersionen zu finden, die sowohl bei vulkanisiertem wie bei unvulkanisiertem Kautschuk eine feste Verbindung mit den üblichen Beflockungsmaterialien ergeben und bei denen weder eine begrenzte Lebensdauer noch die Notwendigkeit der Verwendung organischer Lösungsmittel gegeben ist.

Erfindungsgemäß besteht das Klebmittel aus einer Kombination von

a) 1000 Gewichtsteilen dispergiertem Butadien/Acrylnitrilkautschuk,
b) 100 bis 500 Gewichtsteilen mehrfunktionellen aromatischen Nitrosoverbindungen,

sowie gegebenenfalls weiteren Hilfsstoffen wie halogenhaltige Polymerisate und/oder Mischpolymerisate von (Meth)acrylsäureestern sowie Emulgatoren, Entschäumer, Farbstoffe, Pigmente, Antistatika.

Nach einer bevorzugten Ausführungsform enthalten die erfindungsgemäßen Klebmittel zusätzlich noch 50 bis 300 Gewichtsteile verkappte mehrfunktionelle Isocyanate und 20 bis 100 Gewichtsteile Polyvinylpyrrolidon beziehungsweise wasserlösliche Mischpolymerisate des Vinylpyrrolidons, bezogen auf 100 Gewichtsteile des dispergierten Butadien/Acrylnitril-Kautschuks. Eine zusätzliche Verbesserung der Haftung kann unter Umständen auch durch die Zugabe von Phenolharzen und/oder Melaminbarzen erzielt werden.

Bei den kautschukhaltigen Copolymerisaten aus Butadien und Acrylnitril kann das Verhältnis der Monomeren in den weiten Grenzen von 5 bis 45% Acrylnitril variiert werden. Geeignete Produkte sind bereits als Dispersion handelsüblich. Sie sind häufig dadurch modifiziert, daß zusätzlich weitere Comonomeren, wie Vinylchlorid, Vinylacetat, Styrol und freie Acrylsäure beziehungsweise Methacrylsäure einpolymerisiert wurden. Durch die Wahl der Comonomeren und die Menge ihres Einsatzes können die Eigenschaften der Polymeren in gewünschter Weise angepaßt werden. Bei den für den erfindungsgemäßen Zweck einsetzbaren dispergierten kautschuhtigen Polymerisaten handelt es sich um filmbildende Thermoplaste, die sich für die Beschichtung von Geweben, Papierfolien und dergleichen bewährt haben.

Die zur Herstellung der erfindungsgemäßen Bindemittel geeigneten Nitrosoverbindungen können von den verschiedensten aromatischen Kohlenwasserstoffen abgeleitet werden. Insbesondere kommen solche aromatischen Poly-C-nitroso-Verbindungen mit 1 bis 3 aromatischen Kernen einschließlich annellierten infrage, welche 2 bis 6 Nitroso-Gruppen aufweisen, die direkt an nicht benachbarte Kernkohlenstoffatome gebunden sind. Die bevorzugten Poly-C-nitroso-Verbindungen sind Dinitrosobenzole und Dinitrosonaphthaline, zum Beispiel meta- oder para-Dinitrosobenzol und meta- oder para-Dinitrosonaphthaline. Die Ringwasserstoffatome des aromatischen Kerns können durch Alkyl-, Alkoxy-, Cycloalkyl-, Aryl-, Aralkyl-, Alkaryl-, Arylamin-, Arylnitroso-, Amino-, Halogenreste und dergleichen Reste substituiert sein. Die Anwesenheit solcher Substituenten im aromatischen Kern beziehungsweise Ring hat nur einen geringen Einfluß auf die Aktivität der Poly-C-nitroso-Verbindungen. Als für den erfindungsgemäßen Zweck weiterhin geeignet seien beispielsweise erwähnt: 2,5-Dinitroso-p-cymen, 2-Methyl-1,4-dinitrosobenzol, 2-Methyl-5-chlor-1,4-dinitrosobenzol, 2-Fluor-1,4-dinitrosobenzol, 2-Methoxy-1,3-dinitrosobenzol, 5-Chlor-1,3-dinitrosobenzol, 2-Benzyl-1,4-dinitrosobenzol und 2-Cyclohexyl-1,4-dinitrosobenzol. Selbstverständlich können auch die Bildungskomponenten für die Nitrosoverbindungen, nämlich Oxime mit Oxidationsmitteln, eingesetzt werden.

Bei den gegebenenfalls als weitere Hilfsstoffe mitverwendbaren halogenhaltigen Polymerisaten handelt es sich ebenfalls um bekannte in der Klebstoffindustrie übliche Rohstoffe, wie Polymerisate des Vinylchlorids beziehungsweise Vinyldenchlorids eventuell mit Comonomeren, wie Acrylsäure, Crotonsäure, (Meth)acrylsäurealkylester oder Acrylnitril. Diese Polymerisate können auch einer weiteren Halogenierung, insbesondere Chlorierung unterzogen worden sein. Als weitere wirksame Hilfsstoffe seien wasserlösliche und wasserdispergierbare Mischpolymerisate von (Meth)acrylsäurealkylester hervorgehoben, bei denen der Alkylrest zwischen 1 und 12, insbesondere 1 bis 4 Kohlenstoffatome aufweist. Diese können einer Teilverseifung unterzogen sein. Als Comonomeres für derartige Polymerisate kommt insbesondere Acrylamid infrage.

Nach einer vorteilhaften Ausführungsform enthalten die Klebmittel noch zusätzlich 50 bis 300 Gewichtsteile verkappte mehrfunktionelle Isocyanate und 20 bis 100 Gewichtsteile Polyvinylpyrrolidon beziehungsweise wasserlösliche Mischpolymerisate des Vinylpyrrolidons, jeweils bezogen auf 1000 Gewichtsteile des Butadien/Acrylnitril-Kautschuks. Außerdem kann es sich vorteilhaft auswirken, noch Phenolharz und/oder Melaminharz mitzuverwenden.

Die verkappten mehrfunktionellen Isocyanate leiten sich von den technologisch vielseitig einsetzbaren handelsüblichen Isocyanaten ab. Die sogenannten Isocyanatabspalter können beispielsweise hergestellt werden aus Toluylendiisocyanat, Naphthalindiisocyanat, Isophorondiisocyanat, Diphenylmethandiisocyanat, dimerisiertem Toluylendiisocyanat, Hexamethylendiisocyanat und anderen mehrfunktionellen Isocyanaten, wie Triphenylmethantriisocyanat oder dem Additionsprodukt von 3 Mol Toluylendiisocyanat an 1 Mol Trimethylolpropan. Als Mittel zum Verkappen der Isocyanatgruppen eignen sich beispielsweise Phenole, Alkohole, wie tert. Amylalkohol oder tert. Butanol, Acetessigester, Malonester, Acetylaceton, Butanonoxim, Phthalimid, Imidazol oder Natriumhydrogensulfit.

Die Herstellung der Isocyanatabspalter erfolgt in bekannter Weise bei Raumtemperatur oder vorzugsweise bei Temperaturen um 100°C. Bei der Addition von Verbindungen mit reaktionsfähigen Methylgruppen, wie Malonester und Acetessigester, benötigt man katalytische Mengen von Natrium oder Natriumalkoholat. Die Additionen können in An- oder Abwesenheit von inerten Lösungsmitteln durchgeführt werden.

Das Polyvinylpyrrolidon kann entweder als übliches technisches Homopolymerisat mit einem K-Wert von etwa 30 bis 90 oder als wasserlösliches Mischpolymerisat, beispielsweise Vinylacetat, eingesetzt werden. Auch sind solche Copolymerisate des Vinylpyrrolidons geeignet, die als Comonomere andere Vinylester, (Meth)acrylester oder (Meth)acrylamid sowie Vinylchlorid enthalten. Voraussetzung für den Einsatz in den erfindungsgemäßen Kombinationen ist aber eine gute Wasserlöslichkeit. Die Polymerisate mit höherem K-Wert wirken auch stabilisierend auf die Dispersionen ein.

Selbstverständlich sollten die Gemische der erwähnten Verbindungen auch an sich bekannte Hilfsstoffe enthalten. Neben den haftungsverbessernden Harzen oder Harzvorstufen aus Phenol-, Alkylphenol-, Resorcinharz, Resol, Novolak sind Kondensationsprodukte aus Epichlorhydrin und mehrwertigen Phenolen, wie Diphenylolpropan, Styrol-Maleinsäureanhydrid-Copolymer und dergleichen mehr in Betracht zu ziehen. Schließlich können die erfindungsgemäßen Dispersionen noch übliche Füllstoffe, wie Ruß, Kieselsäure, Zinkoxid, basisches Bleiphosphit und dergleichen mehr. Auch können gewünschtenfalls Pigmente eingearbeitet werden.

Als Dispergierhilfsmittel eignen sich in erster Linie oberflächenaktive Substanzen, insbesondere nichtionogene oberflächenaktive Substanzen. Geeignet sind beispielsweise die Ethylenoxidaddukte an Alkylphenole, wie Nonylphenol oder Fettalkohol oder Fettalkoholpartialester mit Phosphorsäure. Als Stabilisatoren für die Dispersion können weiterhin wasserlösliche Kolloide, wie Methylcellulose, Methylhydroxypropylcellulose, Hydroxyethylcellulose, Polyvinylalkohol mitverwendet werden.

Die neuen Klebmittel können zum Verbinden einer Vielzahl von Flockungsmaterialien verwendet werden, beispielsweise solchen aus Polyestern, Polyamiden oder aus Kunstseide oder auch Baumwolle. Diese Flockungsmaterialien werden für die verschiedensten Zwecke und Anforderungen auf vulkanisiertem beziehungsweise unvulkanisiertem Kautschuk aufgebracht. Geht man von bereits von vulkanisiertem Kautschuk aus, so wird nach dem Aufbringen des Klebmittels in der üblichen Weise die Beflockung vorgenommen. Das Verdunsten des Wassers und die Herstellung der Klebverbindung erfolgt dann bei erhöhten Temperaturen zwischen etwa 90 und 150°C während etwa 5 Minuten bis 20 Minuten. Handelt es sich jedoch um das Aufbringen eines Flockmaterials auf noch nicht vulkenisierter Kautschukmischung, so erwärmt man nach dem Aufbringen des Flockungsmaterials direkt auf Vulkanisationsbedingungen, die je nach Kautschukmischung variieren können, zwischen 15 Minuten und 1 Stunde und Temperaturen von etwa 120 bis 180°C.

Die erfindungsgemäßen Klebemittel sollen einen solchen Feststoffgehalt haben, daß sie noch gut streichbar beziehungsweise spritzfähig sind. Der Feststoffgehalt soll zwischen etwa 20 und 50 Gewichtsprozent liegen. Im allgemeinen sollen keine organischen Lösungsmittel mitverwendet werden, jedoch in untergeordneter Menge, und zwar nicht mehr als etwa 5 Gewichtsprozent der flüssigen Phase überhaupt.

Die unter Verwendung der erfindungsgemäßen Klebmittel herstellbaren beflockten Materialien sind allgemein bekannt. Es handelt sich hier beispielsweise um beflockte Profile aus Kautschuk, die in der Automobilindustrie verwendet werden, um beflockte Matten, um biegsame Wellen, Fußbodenbeläge allgemein, Kautschukhandschuhe, Hafttafeln für die Demonstration im Unterricht, Putzwalzen in der Spinnereimaschinenindustrie, Textilhülsen und ähnliches mehr.

Beispiele

In den folgenden Beispielen wurden die nachstehend mit A, B, C, D, E und F bezeichneten Kautschukmischungen eingesetzt. Nachstehend werden die Zusammensetzung der Mischung sowie die Vulkanisationsbedingungen angegeben.

## Mischung A (NR)

| | Gewichtsteile |
|---|---|
| Naturkautschuk | 100 |
| Zinkoxid | 10 |
| Stearinsäure | 2 |
| Phenyl-β-naphthylamin | 1 |
| Fichtenteer | 2 |
| Ruß-CK3 | 25 |
| Zn-dimethyldithiocarbamat | 0,33 |
| Dibenzothiazyldisulfid | 0,58 |
| Schwefel | 2,75 |
| Vulkanisationsbedingungen: | 10 Minuten bei 153°C. |

## Mischung B (SBR)

| | Gewichtsteile |
|---|---|
| Styrolbutadienkautschuk | 100 |
| Zinkoxid | 5 |
| Stearinsäure | 1 |
| FEF-Ruß (Corax 3) | 50 |
| gesättigte polymere Erd- ölkohlenwasserstoffe(flüssig) | 8 |
| N-Cyclohexyl-2-benzthio- phthalimid | 0,2 |
| Benzthiazyl-2-cyclohexyl- sulfenamid | 0,95 |
| Schwefel | 1,6 |
| Vulkanisationsbedingungen: | 30 Minuten bei 153°C. |

## Mischung C (CR)

| | Gewichtsteile |
|---|---|
| Polychloroprenkautschuk | 100 |
| Magnesiumoxid | 4 |
| Phenyl-ß-naphthylamin | 2 |
| MT-Ruß (Sterling) | 80 |
| Kohlenwasserstoffe KP 300°C | 1 |
| naphthenisches öl | 5 |
| Tetramethylthiurammonosulfid | 0,5 |
| Di-o-tolylguanidin | 0,5 |
| Ethylenthioharnstoff | 0,5 |
| Schwefel | 1 |
| Vulkanisationsbedingungen: | 30 Minuten bei 153°C. |

## Mischung D (NBR)

| | Gewichtsteile |
|---|---|
| Nitrilkautschuk (42% Acrylnitril) | 100 |
| Stearinsäure | 1 |
| Zinkoxid | 5 |
| Dibutylphthalat | 10 |
| SRF-Ruß | 65 |
| Terpenharz | 10 |
| Tetramethylthiuramdisulfid | 0,31 |
| Schwefel | 1 |
| Vulkanisationsbedingungen: | 25 Minuten bei 153°C. |

Es wurden durch Dispergieren in Wasser Bindemittel aus den nachstehend aufgeführten Substanzen hergestellt.

1) Copolymerisat aus Butadien/Acrylnitril (30%) und Methacrylsäure (5%) in Form eines handelsüblichen Latex mit circa 55 bis 58% Feststoff (Nitril-K.).

2) Copolymerisat aus Polyvinylidenchlorid und Acrylsäuremethylester in Form einer handelsüblichen circa 55%-igen Dispersion (PVDC/AM),
3) p-Dinitrosobenzol (DNB),
4) Phenolharz (Resoltyp, wasserunlöslich) (Resol),
5) verkapptes Isocyanat (Umsetzungsprodukt des Adduktes aus 1 Mol Trimethylolpropan mit 3 Mol Toluylendiisocyanat mit Butadienoxim) (Isocyanat).
6) Polyvinylpyrrolidon (K-Wert 70) in Form der 30%-igen wäßrigen Lösung (PVP).
7) Additionsprodukt von 20 Mol Ethylenoxid an 1 Mol Nonylphenol (Emulgator).
8) Zinkoxid,
9) HAF-Ruß,
10) Wasser.

In der nachfolgenden Tabelle 1 ist in Abhängigkeit der einzelnen Substanzen 1 bis 10 die Zusammensetzung der Bindemittel I bis V aufgeführt.

TABELLE 1

| Substanz | Bindemittel | |
|---|---|---|
| | I | II |
| 1) Nitril-K. | 228 | 843 |
| 2) PVDC/AM | 912 | — |
| 3) DNB | 280 | 253 |
| 4) Resol | 42 | 42 |
| 5) Isocyanat | — | — |
| 6) PVP | — | 28 |
| 7) Emulgator | 15 | 14 |
| 8) ZnO | 12 | 8 |
| 9) Ruß | 120 | 97 |
| 10) Wasser | 1580 | 1700 |

Es wurden die in der Tabelle 1 aufgeführten Haftmittel I und II für die Beflockungsversuche eingesetzt. Hierzu wurden Gummiplatten (15×20 cm) aus NR (Mischung A), SBR (Mischung B), CR (Mischung C) und aus NBR (Mischung D) unter den eingangs angegebenen Bedingungen hergestellt. Die Oberflächen der Gummiplatten wurden durch Abwaschen mit Xylol gereinigt, mit den Haftmitteln im Streichauftrag beschichtet und anschließend elektrostatisch beflockt. Als Flocken wurden 0,75 mm lange Polyester-Flocken eingesetzt. Die Trocknung der Naftmittel erfolgte bei 120°C während circa 10 Minuten. Nach circa 10- bis 15-stündiger Lagerung bei Raumtemperatur wurden die beflockten Gummiteile dem Abrieb-Test mit einem Dorn im Reibechtheitsprüfgerät unterzogen. Die Ergebnisse sind in der Tabelle 2 aufgeführt.

TABELLE 2

| Haftmittel | Anzahl der Zyklen | | | |
|---|---|---|---|---|
| | Mischung A | Mischung B | Mischung C | Mischung D |
| I | 25 | 25 | 31 | 38 |
| II | 37 | 46 | 38 | 42 |

Die Kautschukmischungen aus NR (Mischung A), SBR (Mischung B), CR (Mischung C) und aus NBR (Mischung D) wurden mit Haftmitteln im Streichauftrag beschichtet, elektrostatisch beflockt und anschließend im Trockenschrank bei 150°C während 60 Minuten vulkanisiert. Nach circa 10- bis 15-stündiger Lagerung bei Raumtemperaturen wurden die Teile dem Abriebtest unterzogen. Die Ergebnisse sind in der Tabelle 3 aufgeführt.

# 0 021 322

## TABELLE 3

| Haftmittel | Anzahl der Zyklen | | | |
|---|---|---|---|---|
| | Mischung A | Mischung B | Mischung C | Mischung D |
| I | 63 | 38 | 25 | 46 |
| II | 52 | 65 | 42 | 58 |

## Patentansprüche

1. Klebmittel zum Verbinden von Fasern mit Substraten von Kautschuk auf Basis von wäßrigen Dispersionen, gekennzeichnet durch eine Kombination von

a) 1000 Gewischtsteilen dispergiertem Butadien/Acrylnitril-Kautschuk,
b) 100 bis 500 Gewichtsteilen mehrfunktionellen aromatischen Nitrosoverbindungen,

sowie gegebenenfalls weiteren Hilfastoffen, wie halogenhaltige Polymerisate und/oder Mischpolymerisate von (Meth)acrylsäureestern sowie Emulgatoren, Entschäumer, Farbstoffe, Pigmente, Antistatika.

2. Klebmittel nach Anspruch 1, dadurch gekennzeichnet, daß es zusätzlich noch 50 bis 300 Gewichtsteile verkappte mehrfunktionelle Isocyanate und 20 bis 100 Gewichtsteile Polyvinylpyrrolidon beziehungsweise wasserlösliche Mischpolymerisate des Vinylpyrrolidons enthält.

3. Klebmittel nach Anspruch 1 bis 2, dadurch gekennzeichnet, daß es zusätzlich noch Phenolharz und/oder Melaminharze enthält.

## Revendications

1. Colle pour fixer des fibres sur des supports de caoutchouc, à base de dispersions aqueuses, caractérisée par une combinaison de:

a) 1,000 parties en poids de caoutchouc butadiène/acrylonitrile en dispersion,
b) 100 à 500 parties en poids de composés aromatiques nitrosés polyfonctionnels,

et éventuellement d'autres produits auxiliaires tels que des polymères halogénés et/ou des copolymères d'esters (méth)-acryliques, ainsi que des agents émulsionnants, des agents anti-mousse, des colorants, des pigments, des agents antistatiques.

2. Colle selon la revendication 1, caractérisée en ce qu'elle contient en outre de 50 à 300 parties en poids d'isocyanates polyfunctionnels bloqués et de 20 à 100 parties en poids de polyvinylpyrrolidone ou de copolymères hydrosolubles de la vinylpyrrolidone.

3. Colle selon les revendications 1 à 2, caractérisée en ce qu'elle contient en outre une résine phénolique et/ou des résines de mélamines.

## Claims

1. An adhesive based on aqueous dispersions for bonding fibres to rubber substrates, characterised by a combination of

a) 1000 parts by weight of dispersed butadiene/acrylonitrile rubber,
b) 100 to 500 parts by weight of polyfunctional aromatic nitroso compounds,

and optionally other auxiliaries, such as halogen-containing polymers and/or copolymers of (meth)acrylic acid esters and also emulsifiers, defoaming agents, dyes, pigments, antistatic agents.

2. An adhesive as claimed in Claim 1, characterised in that it additionally contains from 50 to 300 parts by weight of masked polyfunctional isocyanates and from 20 to 100 parts by weight of polyvinylpyrrolidone or water-soluble copolymers of vinyl pyrrolidone.

3. An adhesive as claimed in Claims 1 and 2, characterised in that it additionally contains phenolic resin and/or melamine resins.